# EUROPÄISCHE PATENTSCHRIFT

(11) **EP 2 651 599 B1**
(45) Veröffentlichungstag und Bekanntmachung des Hinweises auf die Patenterteilung: **25.11.2015**
(21) Anmeldenummer: 11794753.1
(22) Anmeldetag: 14.12.2011
(51) Int. Cl.: B23Q 11/14, B23Q 11/12, B23Q 1/01

(54) **MITTELS KÜHLLEISTEN GEHALTENES FÜHRRUNGSSYSTEM FÜR WERKZEUGMASCHINEN**
GUIDING SYSTEM FOR MACHINE TOOLS THAT IS HELD BY MEANS OF COOLING BARS
SYSTÈME DE GUIDAGE POUR MACHINES-OUTILS MAINTENU AU MOYEN DE BARRES DE REFROIDISSEMENT

(30) Priorität: 15.12.2010 DE 202010016616 U
(43) Veröffentlichungstag der Anmeldung: 23.10.2013
(73) Patentinhaber: Deckel Maho Seebach GmbH, 99846 Seebach (DE)
(72) Erfinder: TÜLLMANN, Udo, 99817 Eisenach (DE); SUCKERT, Fabian, 99092 Erfurt (DE); EBERT, Jens, 36456 Barchfeld (DE)
(74) Vertreter: Beetz & Partner mbB
(86) Internationale Anmeldenummer: PCT/EP2011/072689
(87) Internationale Veröffentlichungsnummer: WO 2012/080295

(56) Entgegenhaltungen:
- DE-B4-102005 029 854
- FR-A- 1 238 130
- US-A- 5 431 497

## Beschreibung

Die Erfindung betrifft ein Führungssystem für Werkzeugmaschinen, das erste Maschinenteile mit daran befestigten Führungsschienen und mit Klemmleisten zur Fixierung der Führungsschienen in bzw. an dem jeweiligen Maschinenteil aufweist, und bei dem zweite Maschinenteile über Schuhe auf den Führungsschienen der ersten Maschinenteile motorisch verfahrbar abgestützt sind.

Zur Verbesserung von Haupt- und Nebenzeiten werden die Achsgeschwindigkeiten und die Achsbeschleunigungen der Maschinenteile von Werkzeugmaschinen kontinuierlich erhöht. Dies führt zu vergrößerten Reibungsverlusten in Antriebs- und Führungselementen sowie zu einer erhöhten Erwärmung bestimmter Maschinenbereiche. Zur Minderung dieser Probleme werden gekapselte und gekühlte Antriebsmotoren für die jeweils bewegten Maschinenteile eingesetzt. Die thermische Kapselung der Antriebsmotoren kann dazu führen, dass insbesondere in hochdynamischen Maschinen durch Reibung in den Linearführungen mehr Wärme in die Maschinenstruktur eingebracht wird als durch die Antriebe selbst. Die Wärmeeinbringung in die Schlitten über die Führungsschuhe erfolgt dabei an einem definierten Ort und kann im Bedarfsfall durch einen fest installierten Temperatursensor gemessen werden, sodass die Folgen der Wärmeeinbringung auf die Maschine linear kompensiert werden können. Demgegenüber findet die Wärmeeinbringung in die Maschinenstruktur über die Führungsschienen gewissermaßen als "Streckenlast" statt, wobei diese thermische Streckenlast - also auch die örtliche Verteilung der Wärmeeinbringung in den jeweiligen Maschinenteil über die Fahrstrecke - von einer Reihe Parametern und vom NC-Programm abhängt. Da die Wärmeeinbringung sich örtlich ändert, kann sie nicht mehr mit ortsfesten Temperatursensoren erfasst und bewertet werden. Dies gilt insbesondere für diejenigen Fälle, in denen nur kurze Bearbeitungen mit kleinen Hubstrecken in schneller Folge an einem oder mehreren Werkstücken durchgeführt werden. Als nachteilige Folge ergeben sich Erwärmungen und damit thermische Verformungen der Führungsschienen, welche die Bearbeitungsgenauigkeit beeinträchtigen und die Lebensdauer der Führungssysteme durch erhöhten Verschleiß verkürzen.

Nach der EP 1 785 225 A und der JP 2002 266977 gehören Spindelantriebe für Bauteile von Werkzeugmaschinen zum Stand der Technik, die eine Innenkühlung zur Temperaturabsenkung der Spindel über ihre gesamte wirksame Länge und zur Vermeidung von Wärmekonzentrationen in besonders beanspruchten Längenabschnitten aufweisen. Zur Kühlung sind im Inneren der Spindel zwei Längskanäle ausgebildet, die an einem Ende miteinander verbunden sind und an deren anderem Ende Anschlüsse zum Zu- und Abführen der Kühlflüssigkeit vorgesehen sind. Wegen der Rotation der Spindel müssen mehrfach abgedichtete Drehanschlüsse für die unter Druck stehende Kühlflüssigkeit verwendet werden, was neben relativ hohen Kosten einen technischen Aufwand erfordert. Auswirkungen auf das thermische Verhalten des Führungssystems der von den Linearantrieben bewegten Maschinenteile ergeben sich nicht.

Aus der DE 10 2005 029 854 B4 ist eine Führungsschiene für ein Linearführungssystem bekannt, das für den Einsatz in Werkzeugmaschinen konzipiert ist. Die jeweilige Führungsschiene verfügt über eine Innenkühlung mittels einer Kühlflüssigkeit. Statt einer mit technischem Aufwand herzustellenden inneren Längsbohrung ist bei dieser bekannten Führungsschiene in deren Boden eine Längsnut eingearbeitet, in welche die Kühlflüssigkeit eingeleitet wird. Problematisch sind allerdings die im Langzeitbetrieb bei hohen mechanischen bzw. auch thermischen Beanspruchungen auftretenden Leckagen der Kühlflüssigkeit.

Schließlich ist ein Führungssystem für Werkzeugmaschinen aus der FR 1 238 130 (1959) bekannt, das verschiedenartige Führungskonstruktionen, z.B. Führungsschienen von dreieckigem Querschnitt bzw. einteilige Schienenkombinationen mit dreieckigen und rechteckigen Schienen, aufweist. Daneben ist ein gesonderter Hohlträger mit dreiekkigem Querschnitt gezeigt, in dessen Innerem längs durchgehende Trennwände angeordnet sind, die Kanäle z.B. zum Durchleiten eines Kühlmediums darstellen können.

Aufgabe der Erfindung ist es, ein Führungssystem für Werkzeugmaschinen zu schaffen, bei welchem vermieden wird, dass über die Führungsschienen signifikante Wärmemengen in die Maschinenstruktur eingekoppelt werden.

Diese Aufgabe wird durch die Merkmale des Patentanspruchs 1 gelöst. Der erfindungsgemäße Einsatz von Kühlleisten, die in großflächigem engen Druckkontakt an den Führungsschienen und ggf. auch an den thermisch beanspruchten Bereichen der Maschinenteile angeordnet sind, werden durch die hohe thermische Leitfähigkeit größere Wärmemengen aus den Führungsschienen und den angrenzenden Bereichen der Maschinenteile in die Kühlleisten bzw. in das diese durchströmende Kühlmittel übertragen, wodurch höhere Temperaturen der Führungsschienen und insbesondere auch Temperaturanstiege in bestimmten Bereichen der Führungsschienen vermieden werden.

Gemäß einer zweckmäßigen Ausgestaltung der Erfindung sind in jeder der Kühlleisten mindestens ein Längskanal mit einem Zulauf- und Ablaufanschluss für die Kühlflüssigkeit ausgebildet. Dieser Längskanal erstreckt sich über die gesamte Länge der Kühlleiste und gewährleistet eine durchgehende effektive Kühlwirkung der benachbarten Führungsschiene. Zweckmäßig sind jeweils zwei Längskanäle in den seitlichen Bereichen der jeweiligen Kühlleiste vorgesehen, sodass in ihrem mittleren Bereich Elemente zur Befestigung der Kühlleiste an dem Maschinenteil angeordnet werden können. Die beiden parallelen Längskanäle sind zweckmäßigerweise an einem Ende der Kühlleiste miteinander verbunden, sodass sich ein Hin- und Rückfluss der Kühlflüssigkeit ergibt, wobei die Zu- und Ablaufanschlüsse gemeinsam am anderen Ende der jeweiligen Kühlleiste angeordnet sind.

Die Kühlleisten erfüllen eine Doppelfunktion, nämlich einerseits die effektive Kühlung der Führungsschienen und zusätzlich auch die feste und dauerhafte Lagefixierung der Führungsschienen in bzw. an dem jeweiligen Maschinenteil. Zu diesem Zweck sind die Kühlleisten durch Keilflächen-Klemmung und durch Klemmschrauben in direktem Druckkontakt an dem Fußteil der Führungsschiene gehalten. Die Wärmeabfuhr aus dem Fußteil in die jeweilige Kühlleiste führt zu einer geringeren Temperatur im Kopfbereich der Führungsschiene.

Zur Erzielung der angestrebten Effektivität sind die Kühlleisten als Stranggussprofile ausgebildet, und zwar aus einem hoch wärmeleitenden Werkstoff, vorzugsweise aus einem Leichtmetall, wie Aluminium oder dessen Legierungen.

Im Folgenden werden Ausführungsbeispiele der Erfindung anhand der Zeichnung im Einzelnen beschrieben. Es zeigen:
- Fig. 1a, b: ein erstes Ausführungsbeispiel des erfindungsgemäßen Führungssystems in teilgeschnittener perspektivischer Darstellung und im Querschnitt;
- Fig. 2a, b: ein weiteres Ausführungsbeispiel des erfindungsgemäßen Führungssystems in teilgeschnittener perspektivischer Darstellung und im Querschnitt,
- Fig. 3a, b: ein weiteres Ausführungsbeispiel des erfindungsgemäßen Führungssystems in teilgeschnittener Perspektivdarstellung und im Querschnitt.

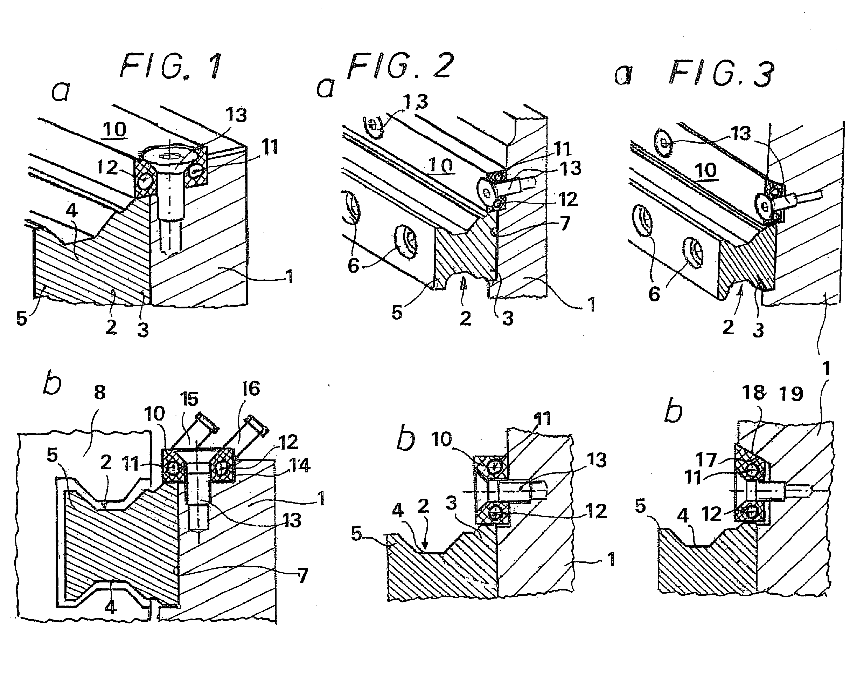

In den Figuren 1 bis 3 der Zeichnung sind gleiche Maschinenteile mit den gleichen Bezugszeichen gekennzeichnet.

Die Werkzeugmaschine weist eine Vielzahl von Maschinenteilen auf, von denen ein erstes Maschinenteil 1 ein Schlitten, ein Teil des Maschinenständers oder des Maschinenbetts sein kann. An diesem in der Zeichnung dargestellten Maschinenteil 1 ist eine profilierte Führungsschiene 2 befestigt, an der ein zweiter Maschinenteil mittels Führungsschuhen 8 geführt ist, von denen nur einer in Fig. 1b schematisch gezeigt ist. Wie gezeigt hat jede Führungsschiene 2 einen verbreiterten Fuß 3, einen schmaleren Mittelteil 4 und einen wieder verbreiterten Kopf 5 und ist durch voneinander in Längsrichtung beabstandete Senkkopfschrauben 6 an dem Maschinenteil 1 befestigt. Zur Festlegung der Führungsschiene 2 weist das Maschinenteil 1 eine flache längs durchgehende Einsenkung 7 auf, in welche die Führungsschiene 2 mit ihrem verbreiterten Fuß 3 eingepasst ist. Die Einsenkung 7 hat eine ebene Grundfläche, an der die Bodenfläche der Führungsschiene in engem Druckkontakt anliegt.

Seitlich gehalten und arretiert ist die jeweilige Führungsschiene 2 durch eine im Querschnitt rechteckige Klemm- und Kühlleiste 10, in deren beiden Seitenbereichen jeweils ein Längskanal 11, 12 ausgebildet ist. Jede Kühlleiste 10 ist durch voneinander in Längsrichtung beabstandete Klemmschrauben 13 in einer längs verlaufenden Aufnahme 14 im Maschinenteil 1 befestigt. Die Bemaßung des Querschnitts der Kühlleiste 10, der Aufnahme 14 im Maschinenteil 1 und des Fußes 3 der Führungsschiene 2 ist so gewählt, dass durch Anziehen der Klemmschrauben 13 ein weitgehend gleichmäßiger Druckkontakt über die gesamte wirksame Länge erreicht wird, wodurch sich ein hoher Wärmeübergang vom erwärmten Fußbereich 5 der Führungsschiene 2 in die Kühlleiste 10 ergibt. Die beiden Kühlkanäle 11, 12 in der Kühlleiste sind an einem Leistenende mit je einem Anschluss 15, 16 verbunden, über die ein Kühlmittel, vorzugsweise eine Kühlflüssigkeit, in die Längskanäle 10, 11 eingeführt wird. Zur Erzielung einer fortlaufenden Zirkulation sind die beiden Längskanäle 10, 12 in der Kühlleiste 10 durch einen Querkanal od. dgl. miteinander verbunden.

Wie in den Fig. 1 bis 3 der Zeichnung gezeigt, können die Kühlleisten 10 unterschiedlich positioniert sein. So liegt bei der Ausführung nach Fig. 1a, 1b die Kühlleiste 10 horizontal flach auf dem Maschinenteil 1 auf und ist in dessen Aufnahme 14 spielfrei eingespannt, während sie in Fig. 2a, 2b eine vertikale Position einnimmt. Bei der Ausführung nach Fig. 3a, 3b hat die ebenfalls vertikal positionierte Kühlleiste 10 eine obere keilförmig wirkende Schrägfläche 17, die mit einer entsprechend geneigten Schrägfläche 18 zusammenwirkt, welche eine Ausnehmung im Maschinenteil 1 begrenzt. Zur Erzielung einer intensiven Klemmwirkung ist die bei dieser Ausführung keilförmige Kühlleiste 10 gegenüber dem Boden der Ausnehmung 19 unter Ausbildung eines Spaltraums beabstandet.

Bei allen vorstehend beschriebenen Ausführungsbeispielen hat die Kühlleiste 10 die Funktion einer seitlichen Arretierung der jeweils zugeordneten Führungsschiene 2 und daneben auch die Wirkung einer intensiven Kühlung nicht nur des Fußbereiches der zugehörigen Führungsschiene, sondern auch des angrenzenden Bereichs des Maschinenteils, wodurch die Wärmeübertragung vom Maschinenteil auf die Führungsschiene, insbesondere den Kopf 5 der Führungsschiene, reduziert wird.

Um die angestrebt hohen Kühlwirkungen zu gewährleisten, bestehen die Führungsschienen vorzugsweise aus hoch wärmeleitenden Materialien. Bezüglich Verarbeitbarkeit und Wärmeleitfähigkeit sind Stranggussprofile aus Leichtmetallen, insbesondere Aluminium und dessen Legierungen, besonders geeignet, bei denen die Längskanäle 11, 12 beim Pressvorgang praktisch ohne zusätzlichen Aufwand mit geformt werden können.

Die Erfindung ist nicht auf die dargestellten Ausführungsbeispiele begrenzt. So können beispielsweise statt in Längsrichtung der Führungsschiene durchgehenden Kühl- und Klemmleisten auch nur kürzere Kühl- und Klemmleisten vorgesehen werden, und zwar vorzugsweise in den besonders thermischen Längsabschnitten der Führungsschienen.

## Patentansprüche

1. Führungssystem für Werkzeugmaschinen mit
- an einem ersten Maschinenteil (1) angeschraubten, gekühlten Führungsschienen (2), die einen verbreiterten Fußteil (3) aufweisen, und
- an einem zweiten Maschinenteil befestigten Schuhen (8), die auf den Führungsschienen (2) des ersten Maschinenteils (1) verfahrbar abgestützt sind,
**dadurch gekennzeichnet, dass**
- eine Kühlleiste (10) durch voneinander in Längsrichtung beabstandete Klemmschrauben (13) in einer längs verlaufenden Aufnahme (14) im ersten Maschinenteil (1) befestigt und durch Keilklemmung in direktem Druckontakt am Fußteil (3) der Führungsschiene (2) gehalten ist, und
- in den beiden Seitenbereichen der Kühlleiste (10) seitlich neben den Klemmschrauben (13) Längskanäle (11, 12) ausgebildet sind, die über Zu- und Ablaufanschlüsse (15, 16) mit einer Kühlflüssigkeit beaufschlagt sind.

2. Führungssystem nach Anspruch 1,
**dadurch gekennzeichnet, dass**
die beiden Längskanäle (11, 12) endseitig miteinander kommunizieren und die Zu- und Ablaufanschlüsse (15, 16) gemeinsam am anderen Ende der Kühlleiste (10) vorgesehen sind.

3. Führungssystem nach Anspruch 1 oder 2,
**dadurch gekennzeichnet, dass**
die Kühlleiste (10) eine keilförmig wirkende Schrägfläche (17) aufweist, die mit einer entsprechend geneigten Schrägfläche (18) am Maschinenteil (1) zusammenwirkt.

4. Führungssystem nach einem der Ansprüche 1 bis 3,
**dadurch gekennzeichnet, dass**
die Kühlleisten (10) Stranggussprofile aus einem Wärmeleiter, vorzugsweise aus Aluminium oder dessen Legierungen, sind.

## Claims

1. A guiding system for machine tools, comprising
- cooled guiding rails (2) which are screwed to a first machine part (1) and have a widened base part (3), and
- shoes (8) which are fastened to a second machine part and are movably supported on the guiding rails (2) of the first machine part (1),
**characterized in that**
- a cooling bar (10) is attached in a longitudinally extending support (14) in the first machine part (1) by clamp screws (13) spaced apart from one another in the longitudinal direction, and is held in direct pressure contact at the base part (3) of the guiding rails (2) by wedge-type clamping, and
- in the two lateral areas of the cooling bar (10) longitudinal channels (11, 12) are formed laterally next to the clamp screws (13), to which channels a coolant is applied via intake and drain connections (15, 16).

2. The guiding system according to claim 1,
**characterized in that**
the two longitudinal channels (11, 12) communicate with each other at one end, and the intake and drain connections (15, 16) are jointly provided at the other end of the cooling bar (10).

3. The guiding system according to claim 1 or 2,
**characterized in that**
the cooling bar (10) has an angular face (17) having a wedge-type effect, which cooperates with a correspondingly inclined angular face (18) at the machine part (1).

4. The guiding system according to one of the claims 1 to 3,
**characterized in that**
the cooling bars (10) are continuous casting profiles made of a thermal conductor, preferably of aluminum or the alloys thereof.

## Revendications

1. Système de guidage pour machines-outils comportant
- des rails de guidage (2) refroidis et vissés sur une première partie de la machine (1), présentant une embase (3) élargie, et
- des sabots (8) fixés sur une deuxième partie de la machine et déplaçables en appui sur les rails de guidage (2) de la première partie de la machine (1),
**caractérisé en ce que**
- une barre de refroidissement (10) est fixée, au moyen de vis de serrage espacées les unes des autres dans le sens longitudinal, dans un premier logement longitudinal (14) de la première partie de la machine (1), et maintenue par calage en contact direct sous pression sur l'embase (3) du rail de guidage (2), et **en ce que**
- les deux zones latérales de la barre de refroidissement (10) présentent, sur le côté des vis de serrage (13), des cannelures longitudinales (11, 12) qui sont alimentées avec un liquide de refroidissement par l'intermédiaire de raccords d'entrée et de sortie (15, 16).

2. Système de guidage selon la revendication 1,
**caractérisé en ce que**
les deux cannelures longitudinales (11, 12) communiquent à leur extrémité, les raccords d'entrée et de sortie (15, 16) étant prévus ensemble sur l'autre extrémité de la barre de refroidissement (10).

3. Système de guidage selon les revendications 1 ou 2,
**caractérisé en ce que**
la barre de refroidissement (10) présente une surface oblique cunéiforme (17) agissant conjointement avec une surface oblique inclinée correspondante (18) sur la partie de la machine (1).

4. Système de guidage selon l'une quelconque des revendications 1 à 3,
**caractérisé en ce que**
les barres de refroidissement (10) présentent des profilés en coulée continue fabriqués dans un matériau conducteur thermique, de préférence en aluminium ou un des ses alliages.
